**Europäisches Patentamt**

**European Patent Office**

**Office européen des brevets**

(19)

(11) Veröffentlichungsnummer: **0 299 451 B1**

# (12) EUROPÄISCHE PATENTSCHRIFT

(45) Veröffentlichungstag der Patentschrift: **16.09.92**

(51) Int. Cl.⁵: **B28D 5/02**

(21) Anmeldenummer: **88111208.0**

(22) Anmeldetag: **13.07.88**

(54) **Vorrichtung zum Justieren des Rundlaufes der Schneidkante von Innenlochsägeblättern.**

(30) Priorität: **14.07.87 DE 3723252**

(43) Veröffentlichungstag der Anmeldung:
**18.01.89 Patentblatt 89/03**

(45) Bekanntmachung des Hinweises auf die
Patenterteilung:
**16.09.92 Patentblatt 92/38**

(84) Benannte Vertragsstaaten:
**CH DE GB IT LI**

(56) Entgegenhaltungen:
**DE-A- 1 923 041        DE-C- 2 841 653**
**DE-C- 3 201 961        DE-C- 3 442 730**
**US-A- 3 039 235        US-A- 3 175 548**
**US-A- 3 254 641**

(73) Patentinhaber: **Wacker-Chemitronic Gesell-**
**schaft für Elektronik-Grundstoffe mbH**
**Johannes-Hess-Strasse 24**
**W-8263 Burghausen(DE)**

(72) Erfinder: **Frank, Walter, Dipl.-Ing.**
**Watzmannring 25**
**W-8269 Burgkirchen(DE)**

## Beschreibung

Die Erfindung betrifft eine Vorrichtung zum Justieren des Rundlaufes der Schneidkante von Innenlochsägeblättern sowie ein Justierverfahren unter Verwendung der Vorrichtung.

Für das Abtrennen von dünnen Scheiben von stab- oder blockförmigen Werkstücken aus Halbleiter- oder oxidischen Materialien wie beispielsweise Silicium, Germanium, Galliumarsenid, Gallium-Gadolinium-Granat, Saphir, oder Quarz werden hauptsächlich Innenlochsägen eingesetzt. Bei diesen sind die Sägeblätter an ihrem Außenrand in eine Halterung eingespannt, während der meist mit einem Nickel-Diamant-Belag beschichtete Innenrand die eigentliche Schneidkante darstellt, die beim Trennvorgang den Materialabtrag bewirkt. Über die im äußeren Randbereich auf das Sägeblatt aufgebrachten Spannkräfte kann dabei der Rundlauf des Sägeblattes insbesondere der Schneidkante in radialer Richtung beeinflußt werden. Geeignete Spannvorrichtungen sind beispielsweise in der DE-PS 3442730, der US-PS 3175548, der US-PS 3039235 oder der DE-PS 2841653 beschrieben.

Es ist seit langem bekannt, daß einem möglichst genauen radialen Rundlauf der Schneidkante und damit dem Spannen des Sägeblattes große Bedeutung zukommt: zum einen wird dadurch die Schnittgenauigkeit, zum anderen auch die Standzeit des Sägeblattes entscheidend beeinflußt. Üblicherweise werden die Sägeblätter sorgfältig von Hand eingespannt, und die Justierung des radialen Rundlaufs der Schneidkante hängt letztendlich vom manuellen Geschick des jeweiligen Operateurs ab und ist entsprechenden Schwankungen unterworfen.

Aufgabe der Erfindung war es daher, eine Vorrichtung anzugeben, mit der sich der Rundlauf der Schneidkante von Innenlochsägeblättern in reproduzierbarer Weise und mit großer Genauigkeit justieren läßt.

Gelöst wird die Aufgabe durch eine Vorrichtung zum Justieren des Rundlaufes der Schneidkante von Innenlochsägeblättern, gekennzeichnet durch:

a) eine Halterung zur Aufnahme des Sägeblattes in spannungsfreier oder vorgespannter Form

b) im äußeren Bereich des Sägeblattes angreifende Spannelemente

c) ein oder mehrere bewegliche Schrittmotoren zur Bedienung der Spannelemente

d) ein den radialen Verlauf der Schneidkante ortsabhängig messendes Rundlaufprüfgerät

e) einen Positionsmotor zur radialen Positionierung des Sägeblattes

f) einen Rechner zur Steuerung der Schrittmotoren, des Rundlaufprüfgerätes und des Positionsmotores

Mit Hilfe der erfindungsgemäßen Vorrichtung wird im ersten Verfahrensschritt das Sägeblatt in der auch bei den manuellen Spannverfahren üblichen Weise in der zu seiner Aufnahme vorgesehenen Halterung befestigt, wobei meist noch keine Spannkräfte, sondern lediglich Haltekräfte auf seinen Außenbereich wirken. In der Regel sind zu diesem Zweck beispielsweise Halteringe oder Klemmringe vorgesehen, in denen das Sägeblatt z.B. reibschlüssig in der Ausgangsposition gehalten wird. Die Halterung ist ihrerseits im allgemeinen direkt an der Antriebstrommel befestigt, welche zumeist eine sich becherartig aufweitende Form besitzt und über eine Antriebseinheit in Rotation versetzt werden kann. Grundsätzlich ist jedoch auch nicht ausgeschlossen, das Sägeblatt bereits vorzuspannen.

Zur Vermessung des radialen Verlaufes der Schneidkante bzw. zur Feststellung der Abweichung vom idealen Rundlauf in Form eines die Drehachse der Antriebstrommel als Mittelpunkt umgebenden Kreises eignen sich Sensoren, mit deren Hilfe eine genügend genaue Erfassung in der angestrebten Größenordnung von wenigen tausendstel Millimetern möglich ist. Solche Sensoren sind kommerziell erhältlich und können beispielsweise auf der Basis von mechanischer oder optischer Messung arbeiten. Bewährt hat sich der Einsatz von Wirbelstrommeßgeräten, die beispielsweise in dem zu vermessenden Bereich des Sägeblattes bzw. der Schneidkante Wirbelströme induzieren, aus deren Veränderung auf den Rundlauf geschlossen werden kann. Besonders gute Ergebnisse werden dabei mit beidseitig der Schneidkante angeordneten Doppelsensorsystemen erzielt, die den Rundlauf elektronisch abtasten.

Die damit ermittelten verschiedenen Werte des Innenlochradius werden zusätzlich jeweils den entsprechenden Positionen auf dem Sägeblatt zugeordnet, beispielsweise indem der zugehörige Drehwinkel gegenüber einem bestimmten Referenzpunkt erfaßt wird. Zu diesem Zweck kann beispielsweise bei ortsfestem Sensor das Sägeblatt in definierter Weise gedreht werden oder aber bei ruhendem Sägeblatt der Sensor in definierter Weise auf einer Kreisbahn bewegt werden.

Gemäß einer bevorzugten Verfahrensvariante wird der eigentliche Spannvorgang in dem Bereich begonnen, in dem die erhaltenen Wertepaare (Radius/Position) einen Minimalwert für den Radius aufweisen, in dem also die größte Dehnung des Sägeblattes erforderlich ist, um einen einwandfreien Rundlauf der Schneidkante zu erzielen. Das Spannen kann dann nach Maßgabe des vorhandenen Spannsystems beispielsweise durch gezieltes Anziehen der Spannschrauben oder durch gezieltes Aufbringen von hydraulischem oder pneumatischem Druck vorgenommen werden.

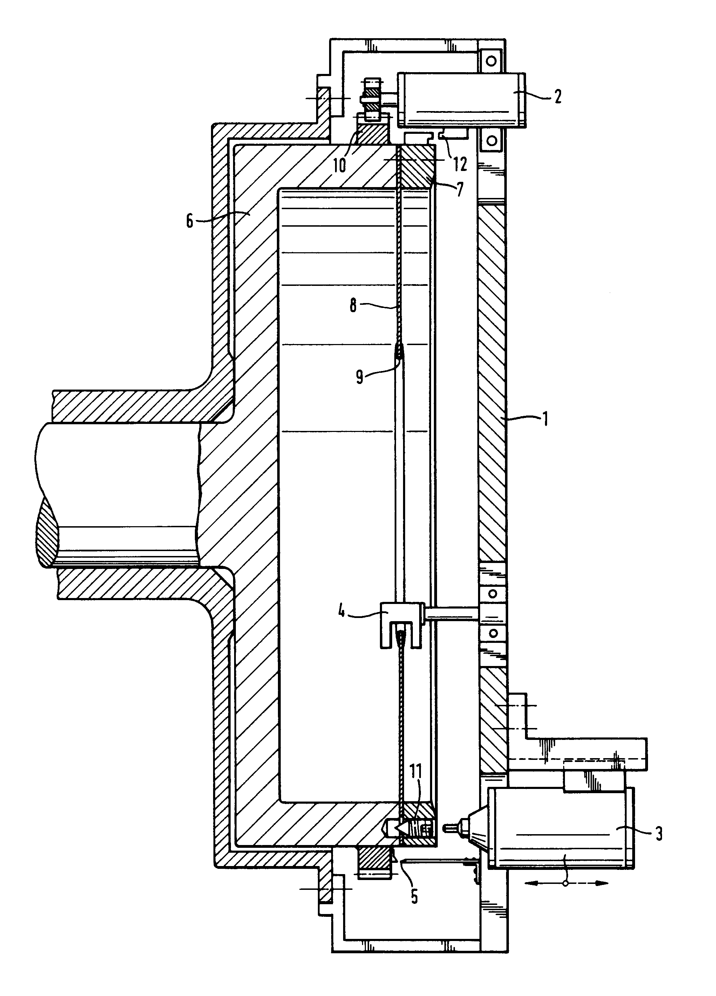

Die Figur zeigt schematisch eine mögliche Ausführungsform der erfindungsgemäßen Vorrichtung zum Justieren des Rundlaufes der Schneidkante von Innenlochsägeblättern. Sie besteht aus einer beispielsweise runden, quadratischen, rechteckigen oder polygonalen Trägerplatte 1, auf der mindestens ein eine gezielte Drehung des Spannsystems mit dem Sägeblatt bewirkender Antrieb, der Positionsmotor 2, sowie mindestens ein eine gezielte Umdrehung der Spannschrauben bewirkender Antrieb, der Spannmotor 3, befestigt sind, wobei beide Antriebe zweckmäßig als Schrittmotoren ausgelegt werden.

Vorteilhaft ist in Höhe des Schneidkantenbereiches auch ein Rundlaufprüfgerät 4, beispielsweise ein beidseitig der Schneidkante angeordnetes Doppelsensorsystem, angebracht, wobei diese Variante mit festem Meßsystem nicht zwingend vorgeschrieben ist. Denkbar sind z.B. auch separate, drehbare Meßsysteme.

Vorzugsweise sind die genannten Elemente auf der Grundplatte verstellbar angeordnet, um Sägeblätter und Spannrahmen verschiedener Außenmaße und Innenlochdurchmesser bearbeiten zu können. Zweckmäßig wird, um bei mehreren Spannvorgängen und verschiedenen Spannrahmen jeweils eine reproduzierbare Arbeitsposition der Trägerplatte relativ zum einzustellenden Sägeblatt, dem Spannrahmen und der Schneidkante zu gewährleisten, mindestens ein Referenzpunkt 5 vorgesehen, der jeweils in eine bestimmte Position gegenüber einem entsprechenden Gegenstück an dem zu justierenden Werkstück gebracht wird. Dafür eignen sich beispielsweise zur Deckung zu bringende oder mittels Justierlehren einzurichtende Markierungen, ineinandersteckbare Zapfen und Zapfenlöcher oder dergleichen. Die Antriebstrommel 6, der Spannrahmen 7, das Sägeblatt 8 sowie die Schneidkante 9 der Innenlochsäge sind nur schematisch dargestellt.

Der eigentliche Spannvorgang kann z.B. in der Weise ablaufen, daß zunächst die beispielsweise gemäß der Figur aufgebaute Spannvorrichtung in die Arbeitsposition relativ zu dem das Sägeblatt 8 eingelegt, aber noch nicht gespannt oder nur vorgespannt enthaltenden Spannrahmen 7 gebracht und bezüglich des/der vorgesehenen Referenzpunkte(s) 5 ausgerichtet wird. Die Spannvorrichtung kann dabei z.B. direkt am Aufbau der Säge befestigt oder aber mittels einer externen Positioniereinrichtung in die Arbeitsposition gebracht und dort gehalten werden.

Mittels des Positionsmotors 2, der beispielsweise mit einem Zahnrad in einen am Sägeblatthaltesystem oder der Antriebstrommel befestigten Zahnkranz 10 greift, wird nun eine erste Umdrehung des zu justierenden Sägeblattes ausgeführt.

Ein solcher Zahnkranz 10 kann dabei günstig nur für den Justiervorgang auf das Sägeblatthaltesystem z.B. aufgesteckt oder aufgeschraubt werden, aber auch dauernd befestigt sein. Eine andere, wegen des geringen apparativen Aufwandes vorteilhafte Möglichkeit besteht darin, den Positionsmotor 2 mit einem Reibrad auszurüsten, welches z.B. am Außenumfang der Antriebstrommel angreifen und die Drehung bewirken kann.

Während der Umdrehung werden über einen nicht dargestellten Rechner die mit Hilfe des Meßgerätes 4 erfaßten Radiuswerte den beispielsweise über die Drehwinkel des Positionsmotors 2 erfaßbaren Positionswerten zugeordnet und gespeichert. Zweckmäßig wird dann mit Hilfe des Positionsmotors 2 das Spannelement (Spannschraube 11), das dem Punkt mit dem minimalen Lochradius bzw. der größten radialen Abweichung der Schneidkante vom Sollwert am nächsten liegt, an den Spannmotor 3 herangeführt.

Gemäß einer vorteilhaften Ausführungsform wird eine zusätzliche Markierung 12 vorgesehen, beispielsweise in Form eines Näherungsschalters mit deren Hilfe die Stellung des Positionsmotors bezüglich der Spannelemente festgelegt und reproduziert werden kann.

Nachdem die Spannschraube 11 beim Spannmotor 3 zum Stehen gekommen ist, wird dieser abgesenkt, führt den Spannvorgang durch definierte Drehung der Spannschraube 11 aus, und fährt wieder in die Ausgangsposition zurück. Nun kann mit Hilfe des Positionsmotors zur nächsten Spannschraube 11 weitergetaktet werden, welche wiederum mittels des Spannmotors 3 in definierter Weise angezogen wird. In Bereichen mit dem maximalen Lochradius brauchen dabei während dieser ersten Phase des Spannvorganges noch keine Spannkräfte auf das Sägeblatt aufgebracht zu werden.

Zweckmäßig wird die während eines Spannvorganges maximal mögliche Schraubendrehung durch den Spannmotor begrenzt, günstig auf 0.25 bis 1.0 Umdrehungen, um eine abschnittsweise Überdehnung des Sägeblattes zu verhindern wobei gegen Ende des Spannvorganges auch kleinere Schritte vorteilhaft sein können. Die jeweils zur Kompensation der Abweichung vom Sollwert erforderliche Schraubendrehung wird vorteilhaft nach Maßgabe des jeweils eingesetzten Spannsystems und Sägeblattes über einen Rechner gesteuert; die entsprechenden Richtwerte werden zweckmäßig in Vorversuchen ermittelt und im Rechner gespeichert.

Gegebenenfalls kann es auch erforderlich sein, wegen der Drehzahlbegrenzung des Spannmotors die erste Phase des Spannvorganges in mehreren Zyklen ablaufen zu lassen, beispielsweise wenn die Differenz zwischen dem maximalen und dem minimalen Innenlochradius einen bestimmten, typischerweise apparativ bedingten Grenzwert überschreitet.

An diese erste Phase, in der der Rundlauf der Schneidkante gewöhnlich auf eine Abweichung vom Sollwert im Bereich von etwa 0.03 mm eingestellt wird, schließt sich dann die eigentliche Spannphase an. Dabei wird über alle Spannschrauben 11 eine Spannung auf das Sägeblatt aufgebracht. Beispielsweise können in einem ersten Spannzyklus alle Schrauben zunächst mit einem bestimmten, konstanten Drehwinkel angezogen werden, um eine bestimmte Grundspannung des Sägeblattes zu erzeugen. Anschließend wird in einem Meßzyklus der Rundlauf der Schneidkante ortsabhängig kontrolliert und gespeichert. In einem meist erforderlichen anschließenden Korrekturzyklus wird dann in Bereichen, in denen der Lochradius kleiner ist als der festgestellte Maximalwert, durch entsprechende Verstärkung der Spannkraft durch gezieltes, rechnergesteuertes Weiterdrehen der Spannschrauben 11 die Schneidkante nach außen gezogen. In einem weiteren Meßzyklus wird das Ergebnis kontrolliert und ortsabhängig erfaßt. Gegebenenfalls werden danach weitere Korrektur- und Meßzyklen gefahren, bis der Rundlauf (radialer Verlauf) der Schneidkante innerhalb des gewünschten Toleranzbereiches, meist 0.01 mm, liegt.

In vielen Fällen ist es auch möglich, erst nach mehreren Spannzyklen einen Meß- und Korrekturzyklus einzuschalten. In einer Weiterbildung des Erfindungsgedankens ist vorgesehen, durch ständigen Abgleich der Soll- und Istwerte des Rundlaufes Spann- und Korrekturzyklen parallel ablaufen zu lassen. Diese Variante zeichnet sich durch besonders geringen Zeitbedarf aus.

Sägeblätter mit mittels der erfindungsgemäßen Vorrichtung justierter Schneidkante weisen gegenüber Sägeblättern mit manuell eingestellter Schneidkante eine deutlich erhöhte Standzeit und verbesserte Schneidleistungen, vor allem in Bezug auf die Geometrie der erhaltenen Scheiben, auf.

## Patentansprüche

1. Vorrichtung zum Justieren des Rundlaufes der Schneidkante von Innenlochsägeblättern, gekennzeichnet durch:

   a) eine Halterung zur Aufnahme des Sägeblattes in spannungsfreier oder vorgespannter Form

   b) im äußeren Bereich des Sägeblattes angreifende Spannelemente

   c) ein oder mehrere bewegliche Schrittmotoren zur Bedienung der Spannelemente

   d) ein den radialen Verlauf der Schneidkante ortsabhängig messendes Rundlaufprüfgerät

   e) einen Positionsmotor zur radialen Positionierung des Sägeblattes

   f) einem Rechner zur Steuerung der Schrittmotoren, des Rundlaufprüfgerätes und des Positionsmotores

2. Vorrichtung nach Anspruch 1, dadurch gekennzeichnet, daß das Rundlaufprüfgerät ein Doppelsensor ist

3. Verfahren zum Justieren des Rundlaufes der Schneidkante von Innenlochsägeblättern durch Ausüben von Spannkräften vermittels im äußeren Randbereich des Sägeblattes angreifender Spannelemente unter Verwendung der Vorrichtung nach einem oder mehreren der Ansprüche 1 und 2, dadurch gekennzeichnet, daß

   a) das Sägeblatt spannungsfrei oder vorgespannt in der zu seiner Aufnahme vorgesehenen Halterung befestigt wird

   b) der radiale Verlauf der Schneidkante ortsabhängig vermessen wird

   c) das Sägeblatt radial durch einen Positionsmotor positioniert wird

   c) das Sägeblatt nach Maßgabe des ermittelten radialen Verlaufes ortsabhängig in definierter Weise gedehnt wird

4. Verfahren nach Anspruch 3, dadurch gekennzeichnet, daß die Dehnung durch die Einwirkung eines oder mehrerer Schrittmotoren auf die Spannelemente erfolgt.

5. Verfahren nach den Ansprüchen 3 und 4, dadurch gekennzeichnet, daß die Dehnung rechnergesteuert erfolgt.

6. Verfahren nach den Ansprüchen 3 bis 5, dadurch gekennzeichnet, daß die Dehnung des Sägeblattes in dem Bereich begonnen wird, in dem die Schneidkante den geringsten Radius aufweist.

7. Verfahren nach den Ansprüchen 3 bis 6, dadurch gekennzeichnet, daß ortabhängiges Vermessen des radialen Verlaufs der Schneidkante und die Dehnung der Spannelemente wiederholt werden, bis der vermessene radiale Verlauf der Schneidkante dem Sollwert entspricht.

## Claims

1. Device for adjusting the true running of the cutting edge of annular sawblades, characterised by:

   a) a holder for receiving the sawblade in tension-free or pretensioned form;

   b) tensioning elements acting in the outer region of the sawblade;

c) one or more movable stepping motors for operating the tensioning elements;

d) a true running test apparatus which measures the radial profile of the cutting edge as a function of position;

e) a positioning motor for positioning the sawblade radially;

f) a computer for controlling the stepping motor, the true running test apparatus and the positioning motor.

2. Device according to Claim 1, characterised in that the true running test apparatus is a double sensor.

3. A method of adjusting the true running of the cutting edge of annular sawblades by exerting tensional forces by means of tensioning elements acting in the outer edge region of the sawblade, using the device according to one or more of claims 1 and 2, characterised in that

a) the sawblade is mounted without tensioning or with pretensioning in the holder designed to receive it;

b) the radial profile of the cutting edge is measured as a function of position;

c) the sawblade is positioned radially by a positioning motor;

d) the sawblade is stretched in a defined manner as a function of position in accordance with the radial profile found.

4. Method according to Claim 3, characterised in that the stretching is carried out through the action of one or more stepping motors on the tensioning elements.

5. Method according to Claims 3 and 4, characterised in that the stretching is computer-controlled.

6. Method according to Claims 3 to 5, characterised in that the stretching of the sawblade is started in the region in which the cutting edge has the smallest radius.

7. Method according to Claims 3 to 6, characterised in that the measurement of the radial profile of the cutting edge and the stretching of the tensioning elements as a function of position are repeated until the measured radial profile of the cutting edge corresponds to the specified value.

**Revendications**

1. Dispositif pour ajuster la concentricité de l'arête de coupe et de lames de scie à trou intérieur, caractérisé par :

a) un support destiné à supporter la lame de scie dans un état sans contrainte ou dans un état précontraint,

b) des éléments de serrage agissant dans la partie extérieure de la lame de scie,

c) un ou plusieurs moteurs pas-à-pas mobiles pour commander les éléments de serrage,

d) un dispositif de contrôle de concentricité mesurant la configuration radiale de l'arête de coupe, en fonction de l'emplacement,

e) un moteur de positionnement servant à positionner radialement la lame de scie,

f) un calculateur servant à commander les moteurs pas-à-pas, le dispositif de contrôle de concentricité et le moteur de positionnement.

2. Dispositif selon la revendication 1, caractérisé en ce que le dispositif de contrôle de concentricité est un capteur double.

3. Procédé pour ajuster la concentricité de l'arête de coupe de lames de scie à trou intérieur au moyen de l'application de forces de serrage à l'aide d'éléments de serrage agissant dans la zone marginale extérieure de la lame de scie, moyennant l'utilisation du dispositif selon une ou plusieurs des revendications 1 et 2, caractérisé en ce que

a) on fixe la lame de scie sans contrainte ou à l'état précontraint, dans le support prévu pour son logement,

b) on mesure, en fonction de l'emplacement, la configuration radiale de l'arête de coupe,

c) on positionne radialement la lame de scie à l'aide d'un moteur de positionnement,

d) on étend de façon définie, en fonction de l'emplacement, la lame de scie conformément à la configuration radiale déterminée.

4. Procédé selon la revendication 3, caractérisé en ce que l'extension est obtenue au moyen de l'action d'un ou plusieurs moteurs pas-à-pas sur les éléments de serrage.

5. Procédé selon les revendications 3 et 4, caractérisé en ce que l'extension s'effectue d'une manière commandée par ordinateur.

6. Procédé selon les revendications 3 à 5, caractérisé en ce que l'extension de la lame de scie commence dans la zone, dans laquelle l'arête de coupe possède le rayon le plus petit.

**7.** Procédé selon les revendications 3 à 6, caractérisé en ce qu'on répète la mesure, en fonction de l'emplacement, de la configuration radiale de l'arête de coupe et l'extension des éléments de serrage, jusqu'à ce que la configuration radiale mesurée de l'arête de coupe corresponde à la valeur de consigne.